# EUROPÄISCHE PATENTSCHRIFT

(11) **EP 2 006 562 B1**
(45) Veröffentlichungstag und Bekanntmachung des Hinweises auf die Patenterteilung: **11.08.2010**
(21) Anmeldenummer: 08010024.1
(22) Anmeldetag: 02.06.2008
(51) Int. Cl.: F16D 13/75

(54) **Kupplung mit Nachstelleinrichtung**
Coupling with readjustment device
Embrayage doté d'un dispositif de réglage

(30) Priorität: 21.06.2007 DE 102007028669
(43) Veröffentlichungstag der Anmeldung: 24.12.2008
(73) Patentinhaber: LuK Lamellen und Kupplungsbau Beteiligungs KG, 77815 Bühl (DE)
(72) Erfinder: Becht, Marco, 77815 Bühl (DE)

(56) Entgegenhaltungen:
- EP-A- 1 624 211
- WO-A-2008/058508
- FR-A- 2 893 370
- US-A1- 2003 164 274

## Beschreibung

Die Erfindung betrifft eine von einer Betätigungsvorrichtung zugedrückte Reibungskupplung mit einer Nachstelleinrichtung zur Kompensation eines Fehlabstandes zwischen den Reibkontaktflächen.

Derartige Reibungskupplungen sind beispielsweise aus der US 2003/0164274 A1 und aus der DE 10 2005 003 505 A1 bekannt. Im Allgemeinen werden derartige Fehlabstände über die Betriebszeit der Reibungskupplung durch Verschleiß der Reibbeläge der Kupplungsscheibe und Setzvorgänge der Belagfederung hervorgerufen. Verschleißkompensation erfolgt zweckmäßigerweise durch einen Ausgleich des Fehlabstands, indem der ideale axiale Abstand der Reibflächen der Kupplung zueinander durch über den Umfang wirksame Rampen-Gegenrampensysteme so gegeneinander verdreht werden, dass sich zwischen Betätigungshebel, der gegebenenfalls durch eine Tellerfeder gebildet sein kann, und einem Anschlag am Kupplungsdeckel die gewünschten Abstandsverhältnisse wieder einstellen.

Bei einer Kompensation des Fehlabstands mittels Überweg wird die Reibungskupplung durch eine Betätigung über den geschlossenen oder geöffneten Zustand hinaus betätigt, indem der Betätigungshebel vom Betätigungssystem entsprechend über diesen Zustand hinaus gedrückt oder entspannt wird. Dabei hebt der Betätigungshebel von einer das Rampen-/Gegenrampensystem sperrenden Einrichtung ab, so dass dieses - meistens unterstützt von einer entsprechenden Kraftspeichereinrichtung - durch Relativverdrehung der Rampen entgegen der Gegenrampen den Fehlabstand ausgleichen kann. Das Maß der Nachstellung hängt dabei wesentlich von der Stellung des Betätigungshebels ab. Für diese Art der Nachstellung durch Erzeugen eines Überwegs haben sich Nachstelleinrichtungen besonders vorteilhaft erwiesen, zwischen dem Rampen-/Gegenrampenssystem und dem Betätigungshebel eine Vorrichtung vorzusehen, mittels derer eine Nachstellung nicht unter Überbrückung des gesamten Überwegs erfolgt sondern portionsweise nachgestellt wird. Hierzu kann eine so genannte Antriebsfeder-Schneckenrad-Vorrichtung verwendet werden, bei der der Überweg und der daraus resultierende zusätzliche axiale Hub des Einrücklagers in Öffnungsrichtung und die wiederum daraus resultierende Verkippung des Betätigungshebels zu einem tangentialen Weg einer an der Antriebsfeder vorgesehenen Zunge führt, die dadurch einen Zahn des Schneckenrades überspringt. Beim nächsten Einrückvorgang verdreht das Schneckenrad das Rampen/Gegenerampensystem um einen vorgegebenen Betrag. Ist der Verschleiß größer als der durch den Betrag verstellte Einrückweg, wird die Nachstellung bei den nächsten Einrückvorgängen solange wiederholt, bis der Verschleiß ausgeglichen ist.

Typische Betätigungssysteme erfüllen die Funktion einer Axialverlagerung des Betätigungshebels, indem diese in Abhängigkeit vom gewünschten Grad des Reibschlusses zwischen Kupplungsreibflächen und abtriebsseitigen Reibbelägen beispielsweise einer Kupplungsscheibe einen definierten Einrückweg vorgeben. Die DE 10 2004 009 832 A1 offenbart hierzu ein Betätigungssystem als Hebelsystem, bei dem ein Hebel über ein Wälzlager auf den Betätigungshebel einwirkt.

Aufgabe der Erfindung ist, eine Reibungskupplung der genannten Gattung in der Weise zu verbessern, dass die Reproduzierbarkeit der Nachstellung weiter verbessert werden kann. Eine Verbesserung soll ohne hohe Kosten vorgenommen werden können und an die bestehenden Betätigungssysteme anpassbar sein.

Die Aufgabe wird durch eine Reibungskupplung für ein Kraftfahrzeug, die in kraftfreien Zustand ausgerückt und durch Axialverlagerung eines von einer Betätigungseinrichtung mittels eines Hebels betätigten Betätigungshebels eingerückt und bei einem über den kraftfreien Zustand hinaus bewegten Überweg einen durch Verschleiß hervorgerufenen axialen Fehlabstand zwischen in der Reibungskupplung vorgesehenen Reibflächen kompensiert, gelöst, wobei ein an der Betätigungseinrichtung vorgesehener schaltbarer Anschlag einen Überweg des Hebels freigibt, wenn ein erfasster Einrückweg des Hebels ein vorgegebenes Maß überschreitet. Durch die Wahl von zwei Zuständen, nämlich einem so genannten Überweganschlag, bei dem die Kupplung gezielt nachstellen kann und einem Anschlag bei gewöhnlichen Kupplungsvorgängen können exakte Stellungen des Hebels und damit des Betätigungshebels an der Reibungskupplungen vorgegeben werden, so dass im Falle einer notwendigen Kompensation des Fehlabstandes stets reproduzierbare Bedingungen vorherrschen. Durch die exakte Einstellung des Anschlages befindet sich der Betätigungshebel immer an der Position, die eine Nachstellung in den ursprünglichen Zustand der Kupplung erlaubt. Weiterhin können durch den schaltbaren Anschlag Betätigungseinrichtungen verwendet werden, die beispielsweise durch Federkraft selbsttätig in den entspannten Zustand zurückkehren, ein aufwändiges Anfahren dieses entspannten Zustands durch eine Kupplungsaktorik kann entfallen. Je nach dem, ob ein Nachstellvorgang eingeleitet oder die Reibungskupplung normal geöffnet werden soll, kehrt die Betätigungseinrichtung an den Anschlag des entspannten Zustands zurück oder - wenn eine Nachstellung erfolgen soll - bei Verschwenkung des schaltbaren Anschlags in der Weise zu einem Gehäuseanschlag, der dem Hebel einen weiteren, zur Nachstellung der Reibungskupplung erforderlichen Weg vorgibt.

Weiterhin kann von Vorteil sein, wenn der Anschlag nach einer Kompensation des Fehlabstands den Überweg wieder verhindert. Dies bedeutet, dass der aus dem Kontaktbereich des Hebels heraus bewegte Anschlag nach einer Nachstellung wieder in den Kontaktbereich des Hebels hinein bewegt wird, damit er bis zur nächsten Nachstellung seine Funktion als Anschlag wieder erfüllen kann. Dies kann in vorteilhafter Gestaltungsweise erfolgen, indem der Hebel diesen Anschlag nach einer Nachstellung selbst wieder zurückschaltet.

Von seiner Funktion her betrachtet kann ein vorteilhaftes Ausführungsbeispiel eine Reibungskupplung umfassen, bei der der Hebel des Betätigungssystems im Laufe einer Betätigung der Reibungskupplung ein mit einer Rampe versehenes steuerndes Bauteil entgegen einer ersten Rückstellkraft mitnimmt. Dieses steuernde Bauteil wirkt dann mit dieser Rampe auf ein gesteuertes, mit einer Gegenrampe versehenes und einen Anschlag für den Hebel aufweisendes Bauteil ein, indem die Rampen aufeinander gleiten und die Gegenrampe durch die am steuernden Bauteil vorgesehene Rampe zwangsgeführt wird und dadurch senkrecht zur vom Hebel beschriebenen Axialbewegung entgegen einer zweiten Rückstellkraft bewegt wird. Dies führt bei einer Axialverlagerung des Hebels während eines Einrückvorgangs zum Verschwenken des am gesteuerten Bauteil angebrachten Anschlags, so dass sich dieser von der Kontaktfläche des Hebels wegbewegt.

Bei zunehmendem Einrückweg, der ein Maß für den zunehmenden Grad des Verschleißes der Reibungskupplung und damit ein Maß für die Notwendigkeit einer Nachstellung zur Kompensation des Fehlabstandes ist, wird bei dem für eine notwendige Nachstellung vorgegebenen Einrückweg vorgesehen, dass sich steuerndes und gesteuertes Bauteil in ihrer aktuellen Lage fixieren. In dieser Position wird bei einem Öffnen der Reibungskupplung infolge seines mit dem gesteuerten Bauteil ausgeschwenkten Zustands für den Hebel unwirksam und dieser läuft bis zu einem axial zurückversetzten Gehäuseanschlag zurück, bei der infolge der weiten Auslenkung des Betätigungshebels eine Kompensation des Fehlabstands eintritt.

Als besonders vorteilhaft erwiesen hat sich dabei, wenn der Hebel eine weitere Einrichtung, beispielsweise Rampe aufweist, die bei Befahren des Überwegs das gesteuerte Bauteil entgegen der zweiten Rückstellkraft über die aktuelle Lage hinaus verlagert, so dass die Fixierung der beiden Bauteile wieder gelöst wird.

Die Umsetzung der zuvor beschriebenen Rampenmechanismen, die bei Kupplungsbetätigungsvorgängen entgegen jeweiliger Rückstellkräfte ausgelenkt werden kann durch vorteilhafte Ausgestaltung der Bauteile in Form von Blattfedern einfach erfolgen. Beispielsweise kann das steuernde Bauteil durch eine einseitig eingespannte steuernde Blattfeder gebildet sein, deren freies Ende eine Rampe aufweist, die entgegen der ersten, durch die Blattfederkonstante gebildeten Rückstellkraft vom Hebel während eines Einrückvorgangs mitgenommen wird. Auf diese Weise kann die Funktion der Rampe mit dem die Rückstellung bewirkenden Element in einem einfach herzustellenden Bauteil zusammengelegt werden.

Weiterhin kann das gesteuerte Bauteil durch eine einseitig eingespannte gesteuerte Blattfeder gebildet sein, deren freies Ende eine Rampe aufweist, die mit der Rampe der steuernden Blattfeder korrespondiert und die entgegen der zweiten, durch die Blattfederkonstante gebildete, senkrecht zur ersten Rückstellkraft wirksame Rückstellkraft von der steuernden Blattfeder während eines Einrückvorganges verlagert wird, wobei ein an der gesteuerten Blattfeder angebrachter Anschlag mit zunehmendem Einrückweg aus einer Kontaktfläche mit dem Hebel ausschwenkt. Auch hier wird die Funktion der Rampe und der diese rückstellenden Kraft in einem Bauteil verbunden. Besonders vorteilhaft ist, wenn beide Blattfedern einstückig gefertigt werden, beispielsweise indem sie aus geeignetem Federstahl gestanzt und anschließend ihrer Funktion gemäß gebogen werden. Unter einem korrespondierenden Verhalten der beiden Rampen ist zu verstehen, dass diese in ihrer Form so aufeinander abgestimmt sind, dass die gesteuerte Blattfeder während ihrer Verlagerung eine Kraft auf die Rampe ausübt, wobei durch entsprechende Schrägstellung der Rampen die Verlagerung der Rampe des steuernden Bauteils eine Richtungsumkehr des gesteuerten Bauteils bewirkt. Hierzu sind die Rampenflächen in vorteilhafter Weise parallel zueinander ausgerichtet. Zur Verminderung von Reibungskräften der Rampenflächen aneinander können die Oberflächen entsprechend behandelt, beispielsweise beschichtet, poliert und/oder gefettet sein.

Sobald ein Einrückweg erkannt wird, der eine Nachstellung der Reibungskupplung erfordert, sollte erfindungsgemäß der Anschlag ausgeschwenkt werden, so dass der Hebel des Betätigungssystems einen Überweg fahren kann. In vorteilhafter Weise ist daher bei einer derartigen Position der Rampen zueinander in einer Blattfeder eine Öffnung vorgesehen, in die eine Fixiernase der anderen Blattfeder so eingreift, so dass die beiden Blattfedern bei dieser Position gegeneinander lagefixiert sind. Beispielsweise kann die Fixiernase elastisch in die Öffnung einschnappen. Dabei können die Fixiernase im steuernden oder gesteuerten Bauteil und die Öffnung entsprechend korrespondierend im anderen Bauteil vorgesehen sein. Durch die Fixierung bleibt zum einen das steuernde Bauteil in seiner Position, die einem Einrückweg, bei dem nachgestellt wird, entspricht. Es versteht sich, dass in dieser Situation der Hebel dennoch über die entspannte Position bis zum Gehäuseanschlag zurückgefahren werden kann, weil die steuernde Blattfeder von einer einseitigen Führung zwar in Einrückrichtung mitgenommen wird, in die Ausrückrichtung jedoch lediglich durch die Rückstellkraft am Hebel in Anlage bleibt. Die Fixierung auf der gesteuerten Blattfeder hält diese jedoch in dieser Position entgegen ihrer Rückstellkraft zurück. Zum anderen bleibt auch die gesteuerte Blattfeder und damit der an ihr befestigte Anschlag, der mit der Blattfeder vernietet, verstemmt, verschraubt, verschweißt oder in anderer Weise verbunden sein kann, in seiner ausgeschwenkten Position zurück, so dass der Hebel den Überweg durchfahren kann.

Um diesen Überweg für die weiteren Betätigungsvorgänge bis zur nächsten fälligen Nachstellung zu sperren, ist es vorteilhaft, wenn die Fixierung der beiden Bauteile sofort nach erfolgter Nachstellung wieder selbstständig gelöst wird. Hierzu kann nach einer Kompensation des Fehlabstands die Lagefixierung mittels einer am Hebel vorgesehenen Entsperrprofil wie Entsperrnase aufgehoben wird, indem diese die gesteuerte Blattfeder gegen die steuernde Blattfeder entgegen der zweiten Rückstellkraft so weit verlagert, dass Öffnung und Fixiernase wieder voneinander getrennt werden. Dieses Entsperrprofil kann ebenfalls durch eine Rampe gebildet sein, die an einem Gegenprofil der gesteuerten Blattfeder angreift und diese entsprechend verlagert.

Die Formen sämtlicher Profile sind in vorteilhafter Weise an die Bewegungsabläufe angepasst. Eine entsprechende Ausgestaltung nicht nur als lineare sondern auch als gebogene, epizyklische und anders geformte Oberflächen sind Bestandteil der Erfindung.

Die Erfindung wird anhand der Figuren 1 bis 7 näher erläutert. Dabei zeigen:
- Figur 1: eine schematische Darstellung einer Reibungskupplung mit einer Nachstelleinrichtung,
- Figuren 2a-2d: eine schematische Darstellung verschiedener Funktionszustände eines schaltbaren Anschlags,
- Figur 3: einen Hebeleinrücker mit einem geschalteten Anschlag,
- Figur 4: ein Ausführungsbeispiel eines geschalteten Anschlags aus Blattfedern,
- Figur 5: einen Schnitt längs der Schnittlinie A-A durch das Ausführungsbeispiel der Figur 5
und
- Figur 6: eine Seitenansicht eines Ausführungsbeispiels eines geschalteten Anschlags.

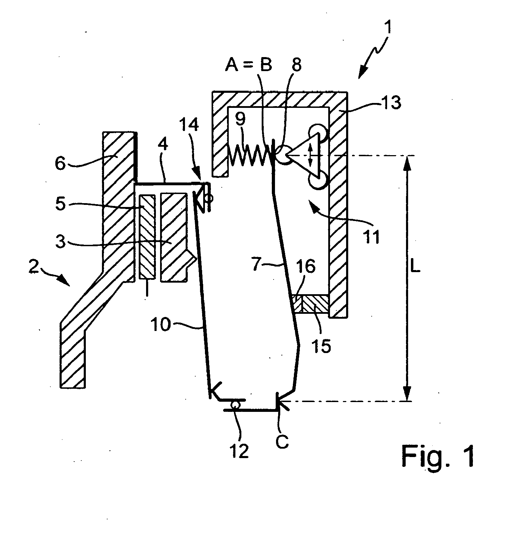

Die Figur 1 zeigt in schematischer Darstellung ein Kupplungssystem 1 mit einer Reibungskupplung 2. Die Reibungskupplung 2 besteht im Wesentlichen aus einer Gegendruckplatte 6, einer Kupplungsscheibe 5, einer Druckplatte 3, einem Kupplungsdeckel 4 und einem Betätigungshebel 10, der hier als Tellerfeder ausgebildet ist. Bei der in Figur 1 beispielsweise dargestellten Reibungskupplung 2 handelt es sich um eine sogenannte zugedrückte Kupplung, die im kraftfreien Zustand geöffnet ist und bei Beaufschlagung des Betätigungshebels 10 mit einer vom Ausrücker vorgegebenen Kraft durch Axialverlagerung des Betätigungshebels 10 geschlossen wird, indem die Reibflächen der Kupplungsscheibe 5 einerseits und die Reibflächen der Druckplatte 3 und der Gegendruckplatte 5 in Reibeingriff gebracht werden. Dementsprechend handelt es sich bei dem dargestellten Ausführungsbeispiel bei der Kupplungsbetätigungsvorrichtung um einen so genannten Hebeleinrücker 11 und das Lager am Betätigungshebel 10 ist ein Einrücklager 12. Es versteht sich, dass bei so genannten aufgedrückten Kupplungen eine entsprechende Verwendung der Kupplungsbetätigungsvorrichtung als Hebelausrücker in ähnlicher Weise vorteilhaft sein kann und daher von der Offenbarung ebenfalls umfasst ist.

Der Hebeleinrücker für die Reibungskupplung 2 besteht im Wesentlichen aus einem Hebelsystem, welches gehäusefest an einer Abstützung 13 angeordnet ist. Der Hebeleinrücker wirkt mittels eines Hebels 7 mit einer Hebellänge L auf das Einrücklager 12, welches um eine hier nicht dargestellte Getriebeeingangswelle herum angeordnet ist, und als Axiallager die Drehzahlunterschiede zwischen der mit Motordrehzahl drehenden Reibungskupplung 2 und dem gehäusefesten Hebel 7 ausgleicht.

In der Figur 1 liegen die Federeinrichtung, hier in Form einer Druckfeder 9, das radial äußere Hebelende des Hebels 7 mit dem Auflagepunkt A, eine zwischen den beiden Hebelenden des Hebels 7 verlagerbare Rolleneinheit 8 mit dem Auflagepunkt B und der am radial inneren Hebelende am Einrücklager 12 anliegenden Auflagepunkt C im Wesentlichen auf einer Wirklinie. Die Reibungskupplung 2 wird betätigt, indem die Rolleneinheit 8 verlagert wird, woraus entgegen der Kraft der Druckfeder 9 der Hebel 7 am Auflagepunkt C verlagert wird. Im gezeigten Ausführungsbeispiel ist die Reibungskupplung 2 geöffnet, demzufolge fallen bei radialäußerer Position der Rolleneinheit die Auflagepunkte A und B zusammen. Zum Schließen der Reibungskupplung 2 läuft die verlagerbare Rolleneinheit 8 auf einer im Wesentlichen radialen Teilfläche des Hebels 7 unter Abstützung auf einer Grundplatte oder auf der Getriebegehäusewand direkt nach innen. Der Hebel 7 ist in Figur 1 nicht plan dargestellt. Vielmehr ist er aus der Sicht der Rolleneinheit 8 gewissermaßen konkav geformt, wodurch die Kraftentfaltung am Betätigungshebel 10 und damit an den Reibflächen der Reibungskupplung angepasst werden kann. Die Rolleneinheit 8 besteht aus mehreren Laufrollen 31, die aus Gründen der Laufrichtung einerseits auf der Oberfläche des Hebels 7 und andererseits auf der Grundplatte abrollen.

An der in Figur 1 gezeigten Position der Rolleneinheit 8 bzw. des Auflagepunktes B wirkt die Spannkraft des Energiespeichers 9 auf einer Hebellänge, die gleich null ist. Deshalb kann kein Moment des Hebels 7 auf das Einrücklager 12 wirken. Wird nun die Rolleneinheit 8 radial zum Einrücklager 12 hin bewegt, so nimmt die Hebellänge zwischen dem Energiespeicher 9 und dem Drehpunkt 8 immer weiter zu. Gleichzeitig verkürzt sich die Hebellänge des mit der Rolleneinheit 8 mitgeführten Auflagepunktes B bis zum Auflagepunkt C am Einrücklager 12. Durch das Verlagern des Auflagepunktes B wird eine Kraftveränderung auf das Einrücklager 12 bewirkt, wodurch die Einrückkraft größer wird, je näher der Auflagepunkt B an das Einrücklager 12 heranrückt. In umgekehrter Weise wird durch die Kraftverhältnisse bewirkt, dass bei Ausbleiben einer Kraft auf die Rolleneinheit 8 diese nach radial außen vom Einrücklager 12 wegbewegt wird, so dass die Reibungskupplung 2 wieder ausgerückt wird. Dadurch kann in einfacher Weise eine selbstöffnende Wirkung der Reibungskupplung 2 erzielt werden. Insbesondere im Einsatz bei Doppelkupplung ist dieser Effekt besonders vorteilhaft.

Beispielsweise infolge von Verschleiß in den Reibbelägen der Kupplungsscheibe 5 oder Setzverlusten der Belagfederung zwischen Reibbelägen und der Kupplungsscheibe ist der axiale Abstand zwischen Druckplatte 3 und Gegendruckplatte 6 über die Betriebsdauer der Reibungskupplung 2 Veränderungen unterworfen, die sich unter anderem in einer Verlängerung des Einrückwegs des Betätigungshebels 10 bemerkbar machen. Derartige Änderungen des Einrückweges machen sich in der Auslegung des Betätigungssystems negativ bemerkbar, da die Bauteile und die in der Reibungskupplung und im Betätigungssystem auftretenden Kräfte auf diese Änderungen über Lebensdauer ausgelegt werden müssen. In der Reibungskupplung 2 ist daher eine Nachstelleinrichtung 14 vorgesehen, die einen dem Fehlabstand zwischen Druckplatte 3 und Gegendruckplatte 6 entsprechenden Ausgleich zwischen Kupplungsdeckel 4 und Betätigungshebel 10 einstellt, indem zwischen diesen Teilen in Umfangsrichtung sich erhebenden Rampen durch Verdrehen eine axialen Abstand erhöhen. Im nicht nachstellenden Zustand der Kupplung sind diese Rampen beispielsweise durch Reibung bezüglich einer Verdrehung in Umfangsrichtung und damit bezüglich eines ungewollten Nachstellens gehemmt. Wird der Betätigungshebel 10 über ein vorherbestimmtes Maß in Ausrückrichtung bewegt, hebt dieser von der Nachstelleinrichtung 14 ab und die Rampen der Nachstelleinrichtung können - beispielsweise von einer Federeinrichtung unterstützt - solange in Umfangsrichtung verdreht werden, bis sie den durch den Überweg des Betätigungshebels 10 entstandenen Abstand, der idealerweise dem Fehlabstand entspricht, ausgeglichen haben. Es versteht sich, dass andere vorteilhafte Nachstelleinrichtungen - wie beispielsweise die oben beschriebene Nachstelleinrichtung mit einer federbelasteten Schnecke, die bei jedem Nachstellen nur einen begrenzten Einrückweg kompensiert, - ebenfalls vorteilhaft sein kann, insbesondere wenn vermieden werden soll, dass zu große Nachstellwege eingestellt werden.

Von entscheidender Bedeutung für eine korrekte Nachstellung ist daher die Einstellung eines korrekten Überwegs. Der Hebeleinrücker 11 ist daher so ausgestaltet, dass dessen Hebel 7 selbststätig, beispielsweise federbelastet, oder von einem Aktor, beispielsweise einem Elektromotor, angetrieben in eine Nulllage bei geöffneter Reibungskupplung 2 zurückkehrt, die im nicht nachstellenden Zustand durch einen gehäusefesten Anschlag 15 gebildet wird, auf dem zusätzlich ein schaltbarer Anschlag 16 angeordnet ist. Die axiale Positionierung beider Anschläge ist so ausgelegt, dass keine Nachstellung erfolgt. Wird in Folge eines verlängerten axialen Einrückweges festgestellt, dass eine Nachstellung erforderlich ist, wird der schaltbare Anschlag 6 aus dem Axialweg des Hebels 7 entfernt, so dass dieser einen weiteren, über die Nulllage hinausgehenden Überweg beschreiten kann, der zur einer exakten Nachstellung an der Nachstelleinrichtung 14 führt. Weitergehende Ausführungen, wie ein schaltbarer Anschlag selbsttätig schaltend ausgeführt werden kann, werden in den nachfolgenden Figuren beschrieben.

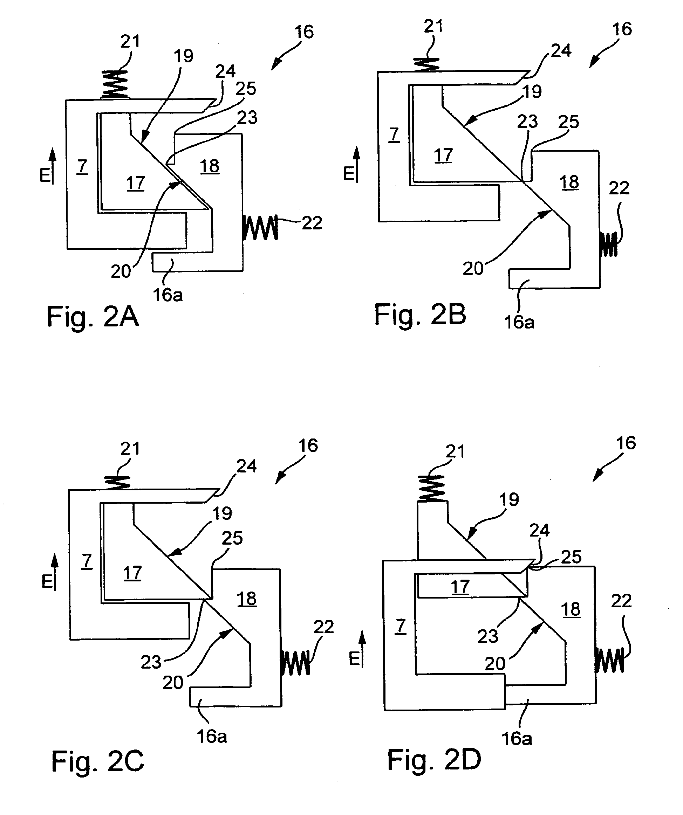

Die Figuren 2a bis 2d zeigen schematisch einen schaltbaren Anschlag 16 in verschiedenen Betriebs- beziehungsweise Funktionszuständen. Die den Figuren 2a - 2d zugrunde liegenden Baumerkmale sollen vorab beschrieben werden. Dem Hebel 7 zur Einwirkung auf den Betätigungshebel 10 (Figur 1) der Reibungskupplung sind ein steuerndes Bauteil 17 und ein gesteuertes Bauteil 18 zugeordnet. Das steuernde Bauteil 17 wird einseitig in Einrückrichtung E der Reibungskupplung entgegen einer Rückstellkraft einer Federeinrichtung 21 vom Hebel 7 mitgenommen und weist eine Rampe 19 auf, mittels derer das gesteuerte Bauteil 18 entgegen einer Rückstellkraft einer Federeinrichtung 22 durch Einwirkung der Rampe 19 auf eine am gesteuerten Bauteil 18 korrespondierend vorgesehene Gegenrampe 20 senkrecht zur Bewegungsrichtung der Einrückrichtung E verlagert wird. Weiterhin weist das gesteuerte Bauteil 18 eine Fixiernase 23 auf und der Hebel 7 eine Entsperrprofil 24 auf, das mit der Entsperrkante 25 des gesteuerten Bauteils 18 in Wechselwirkung tritt. Das gesteuerte Bauteil 18 bildet mit seinem verschwenkbaren Anschlag 16a die Möglichkeit einer Schaltung eines vom Einrückweg E abhängigen Überweg.

Die Funktion wird in den Figuren 2a bis 2d in vier Etappen dargestellt. Figur 2a zeigt die entspannte Stellung einer geöffneten Reibungskupplung. Der Hebel 7 ruht am Anschlag 16a in seiner in dieser Etappe maximal zurückgezogenen Positionen, beide Bauteile 17, 18 sind in einer bis auf gewünschte Vorspannungen der Federeinrichtungen 21, 22 entspannten Position.

Figur 2b zeigt den Zustand einer eingerückten Reibungskupplung, bei der eine Nachstellung noch nicht erforderlich ist. Die durch eine Verlagerung des Hebels 7 in Einrückrichtung E bewirkte Mitnahme des steuerenden Bauteils 17 entgegen der Kraft der Federeinrichtung 21 bewirkt eine Verlagerung des gesteuerten Bauteils 18 entgegen der Kraft der Federeinrichtung 22 durch Abgleiten der Gegenrampe 20 auf der Rampe 19. Dadurch wird zwar bereits der im gesteuerten Bauteil 18 integrierte schaltbare Anschlag 16 proportional zum zurückgelegten Weg des Hebels ausgeschwenkt, bei einem Ausrücken der Kupplung kehrt in diesem Zustand das gesteuerte Bauteil 18 samt Anschlag 16a wieder in die Ausgangsstellung zurück, da das gesteuerte Bauteil 18 von dessen Federeinrichtung wieder zurückbewegt wird.

In Figur 2c ist der Einrückweg so groß geworden, dass die Kante der Fixiernase 23 überwunden wurde. Der Abstand der Fixiernase ist so gewählt, dass bei einem Überwinden der Kante eine notwendige Nachstellung eingeleitet wird. Infolge der Beaufschlagung der Kraft der Federeinrichtung 22 fixieren sich steuerndes Bauteil 17 und gesteuertes Bauteil 18 aufeinander. Bei einem erneuten Ausrücken der Reibungskupplung wird der Hebel 7 ohne das steuernde Bauteil 18 entgegen der Einrückrichtung bewegt. Da das gesteuerte Bauteil 18 ebenfalls nicht in seine Ausgangstellung zurückkehrt, ist der Anschlag 16a für den Hebel 7 nicht wirksam und es wird ein Überweg bis zu einem - nicht dargestellten - weiter zurückliegenden gehäusefesten Anschlag eingestellt, der an der Reibungskupplung zu einem Nachstellvorgang mit Ausgleich des Fehlabstands führt.

In Figur 2d wird die Entsperrung der Fixierung der beiden Bauteile 18, 19 aufeinander dargestellt. Der Hebel 7 wirkt dabei mittels seines Entsperrprofils 25 auf die am gesteuerten Bauteil 18 vorgesehene Entsperrkante 25 ein, wenn er in den gehäusefesten Anschlag übergeht. Durch die Einwirkung des Hebels 7 auf die Entsperrkante 25 wird das gesteuerte Bauteil 18 weiter entgegen der Wirkung der Federeinrichtung 22 verlagert und das steuernde Bauteil wird frei und kehrt unterstützt von der Federeinrichtung 21 an den Hebel 7 zurück. Beim nächsten Einrückvorgang kommt dann schließlich die Gegenrampe 20 des gesteuerten Bauteils 18 wieder in Anlagekontakt mit der Rampe 19 des steuernden Bauteils.

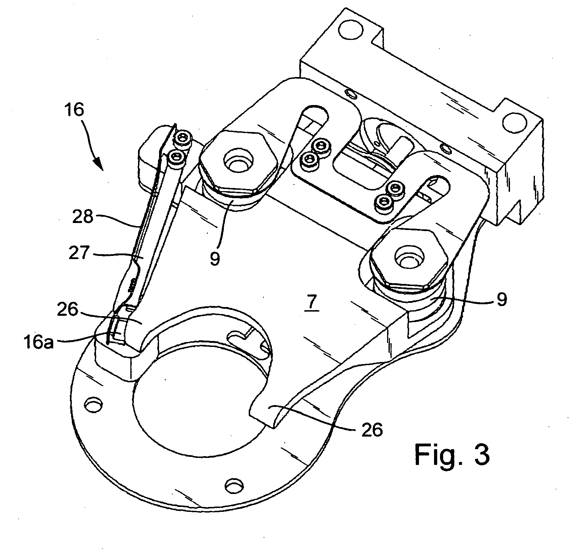

Figur 3 zeigt ein Ausführungsbeispiel eines Hebeleinrückers 11 mit einem schaltbaren Anschlag 16. Der Hebel 7 wird von einer aus dieser Darstellung nicht ersichtlichen Rolleneinheit entgegen der Wirkung der Druckfedern 9 verlagert, wobei eine entsprechende Axialbewegung an den Hebelenden 26 entsteht, die über ein Einrücklager auf den Betätigungshebel der Reibungskupplung übertragen wird. Zur Funktionsweise wird auf Figur 1 verwiesen.

Der schaltbare Anschlag 16 wird in dem gezeigten Ausführungsbeispiel aus zwei einteilig miteinander verbundenen Blattfedern 27, 28, die einseitig gehäusefest eingespannt sind und sich bei einem Verschwenken selbstständig wieder in die Ausgangslage zurück bewegen, so dass die in den Figuren 2a-d dargestellten Federeinrichtungen entfallen können beziehungsweise in die Blattfedern integriert sind. Die steuernde Blattfeder 27 ist biegeweich in Bewegungsrichtung des Hebels 7 und wird von diesem mittels einer am Hebel vorgesehenen Nase 29 mitgenommen. Die gesteuerte Blattfeder 28 ist senkrecht zur Bewegungsrichtung des Hebels 7 biegeweich und nimmt an ihrem Ende den Anschlag 16a auf.

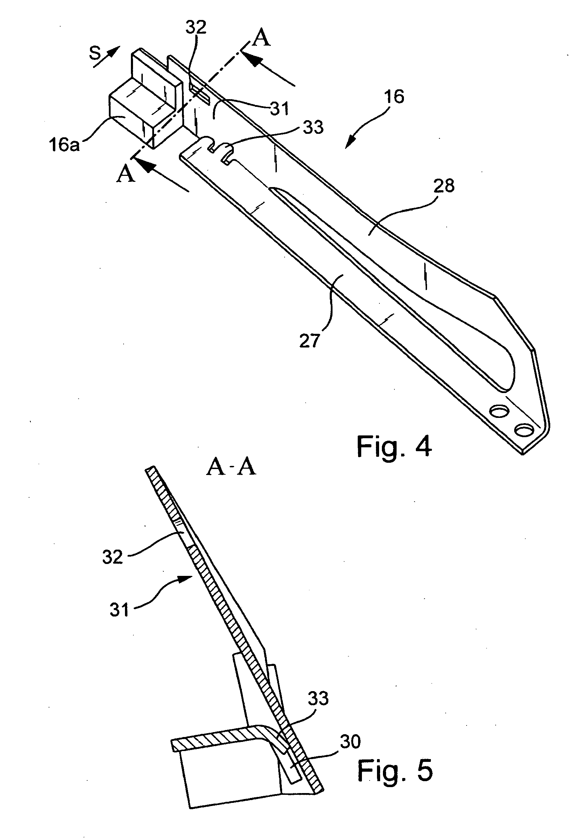

Zur Verdeutlichung der Funktion und Anordnung des schaltbaren Anschlags 16 der Figur 3 ist dieser in Figur 4 isoliert in Ansicht schematisch dargestellt. Vorteilhafterweise ist der schaltbare Anschlag 16 aus einem Federblech gestanzt und entsprechend vorgebogen. Am nicht eingespannten Ende der gesteuerten Blattfeder 28 ist der Anschlag 16a angeordnet. Beispielsweise wird ein entsprechend geformtes Metallstück angenietet, gepunktet, geschweißt. In der steuerenden Blattfeder 27 ist ein Profil 30 eingeformt, beispielsweise eingeprägt, das in eingebautem Zustand mit einem entsprechend geformten Gegenprofil 31 wechselwirkt, so dass bei einer Verlagerung der steuernden Blattfeder 27 während einer Mitnahme durch den Hebel 7 (Figur 3) die gesteuerte Blattfeder 28 und damit der Anschlag 16a in Schwenkrichtung S verlagert wird. Die gesteuerte Blattfeder 28 weist entsprechend einer Position, in der eine Nachstellung der Reibungskupplung erfolgen soll, eine Öffnung 32 auf, in die bei Erreichen der Öffnung 32 eine in der steuernden Blattfeder 27 vorgesehene, beispielsweise aus dieser ausgestellte Fixiernase 33 eingreift und eine Fixierung der beiden Blattfedern aufeinander bewirkt. Der in Figur 5 dargestellte Schnitt entlang der Schnittlinie A-A macht die Anordnung und Ausgestaltung des Gegenprofils 31 mit der Öffnung 33 deutlich, die von dem Profil 30 mit der Fixiernase 33 beaufschlagt wird.

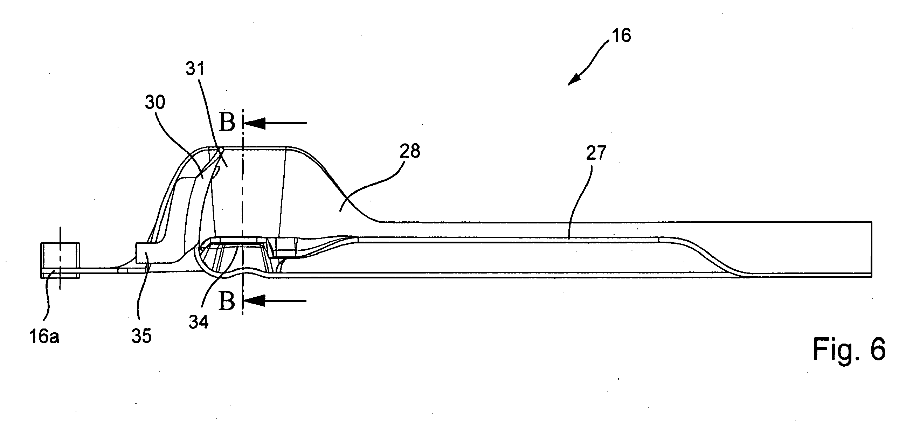

Figur 6 zeigt eine weitere leicht geänderte Alternative eines schaltbaren Anschlags 16 in Seitenansicht mit einer steuernden Blattfeder 27 und einer gesteuerten Blattfeder 28, an der der Anschlag 16a abgebracht ist. Die steuerende Blattfeder 27 weist selbst eine Mitnahmenase 34 auf, die auf dem Hebel des Betätigungssystems aufliegt oder eingehängt wird. Auf diese Weise kann ein entsprechend ausgestalteter Hebel unverändert bleiben. Profil 30 und Gegenprofil 31 sind entsprechend der in Figur 4 gezeigten Ausführungen ausgestaltet. Zusätzlich ist - im Gegensatz zu den unter Figuren 2a - 2d beschrieben Ausführungsbeispielen an der steuernden Blattfeder 27 eine Entsperrnase 35 vorgesehen, die bei Beaufschlagung durch den Hebel die Fixierung zwischen der Öffnung und der Fixiernase trennt.

**Bezugszeichenliste**

| | | | |
|---|---|---|---|
| 1 | Kupplungssystem | 19 | Rampe |
| 2 | Reibungskupplung | 20 | Gegenrampe |
| 3 | Druckplatte | 21 | Federeinrichtung |
| 4 | Kupplungsdeckel | 22 | Federeinrichtung |
| 5 | Kupplungsscheibe | 23 | Fixiernase |
| 6 | Gegendruckplatte | 24 | Entsperrprofil |
| 7 | Hebel | 25 | Entsperrkante |
| 8 | Rolleneinheit | 26 | Hebelende |
| 9 | Druckfeder | 27 | Streuende Blattfeder |
| 10 | Betätigungshebel | 28 | Gesteuerte Blattfeder |
| 11 | Hebeleinrücker | 29 | Nase |
| 12 | Einrücklager | 30 | Profil |
| 13 | Abstützung | 31 | Gegenprofil |
| 14 | Nachstelleinrichtung | 32 | Öffnung |
| 15 | Gehäusefester Anschlag | 33 | Fixiernase |
| 16 | Schaltbarer Anschlag | 34 | Mitnahmenase |
| 16a | Anschlag | 35 | Entsperrnase |
| 17 | Steuerndes Bauteil | E | Einrückrichtung |
| 18 | Gesteuertes Bauteil | S | Schwenkrichtung |

## Patentansprüche

1. Reibungskupplung (2) für ein Kraftfahrzeug, mit einer Gegendruckplatte (6), einer Kupplungsscheibe (5), einer Druckplatte (3), einem Kupplungsdeckel (4) und einem Betätigungshebel (10) und einer Betätigungseinrichtung mit einem Hebel (7), wobei die Reibungskupplung im kraftfreien Zustand ausgerückt und durch Axialverlagerung des von der Betätigungseinrichtung mittels des Hebels (7) betätigten Betätigungshebels (10) eingerückt und bei einem über den kraftfreien Zustand hinaus bewegten Überweg einen durch Verschleiß hervorgerufenen axialen Fehlabstand zwischen in der Reibungskupplung (2) vorgesehenen Reibflächen kompensiert, **dadurch gekennzeichnet, dass** ein an der Betätigungseinrichtung vorgesehener schaltbarer Anschlag (16) einen Überweg des Hebels (7) freigibt, wenn ein erfasster Einrückweg des Hebels (7) ein vorgegebenes Maß überschreitet.

2. Reibungskupplung (2) nach Anspruch 1, **dadurch gekennzeichnet, dass** der schaltbare Anschlag (16) nach einer Kompensation des Fehlabstands den Überweg wieder verhindert.

3. Reibungskupplung (2) nach 1 oder 2, **dadurch gekennzeichnet, dass** der Hebel (7) im Laufe einer Betätigung ein mit einer Rampe (19) versehenes steuerndes Bauteil (17) entgegen einer ersten Rückstellkraft mitnimmt, das auf ein gesteuertes, mit einer Gegenrampe (20) versehenes und einen Anschlag (16a) für den Hebel (7) aufweisendes Bauteil (18) in der Weise einwirkt, dass dieses senkrecht zur vom Hebel (7) beschriebenen Axialbewegung entgegen einer zweiten Rückstellkraft bewegt wird.

4. Reibungskupplung (2) nach Anspruch 3, **dadurch gekennzeichnet, dass** bei dem vorgegebenen Einrückweg sich steuerndes Bauteil (17) und gesteuertes Bauteil (18) in ihrer aktuellen Lage fixieren, wobei in dieser aktuellen Lage der Anschlag (16a) für den Hebel (7) unwirksam ist und der Hebel (7) den zur Kompensation des Fehlabstands notwendigen Überweg beschreitet.

5. Reibungskupplung (2) nach Anspruch 3 oder 4, **dadurch gekennzeichnet, dass** der Hebel (7) ein Entsperrprofil (24) aufweist, das bei Befahren des Überwegs das gesteuerte Bauteil (18) entgegen der zweiten Rückstellkraft über die aktuelle Lage hinaus verlagert, so dass die Fixierung der beiden Bauteile (17, 18) wieder gelöst wird.

6. Reibungskupplung (2) nach einem der Ansprüche 3 bis 5, **dadurch gekennzeichnet, dass** das steuernde Bauteil (17) durch eine einseitig eingespannte steuernde Blattfeder (27) gebildet ist, deren freies Ende ein Profil (30) aufweist, das entgegen der ersten, durch die Blattfederkonstante gebildeten Rückstellkraft vom Hebel (7) während eines Einrückvorgangs mitgenommen wird.

7. Reibungskupplung (2) nach Anspruch 6, **dadurch gekennzeichnet, dass** das gesteuerte Bauteil (18) durch eine einseitig eingespannte gesteuerte Blattfeder (28) gebildet ist, deren freies Ende ein Gegenprofil (31) aufweist, das mit dem Profil (30) der steuernden Blattfeder (27) korrespondiert und die entgegen der zweiten, durch die Blattfederkonstante gebildete, senkrecht zur ersten Rückstellkraft wirksame Rückstellkraft von der steuernden Blattfeder (27) während eines Einrückvorganges verlagert wird, wobei ein an der gesteuerten Blattfeder (28) angebrachter Anschlag (16a) mit zunehmendem Einrückweg aus einer Kontaktfläche mit dem Hebel (7) ausschwenkt.

8. Reibungskupplung (2) nach den Ansprüchen 6 und 7, **dadurch gekennzeichnet, dass** bei einer Position von Profil (30) und Gegenprofil (31) zueinander, die einem vorgegebenen Einrückweg entspricht , bei dem einen Kompensation des Fehlabstandes erfolgen soll, in der Blattfeder (27, 28) eine Öffnung (32) so vorgesehen ist, dass die eine Fixiernase (33) der anderen Blattfeder (28, 27) in die Öffnung (32) eingreift, so dass die beiden Blattfedern (27, 28) bei dieser Position gegeneinander lagefixiert sind.

9. Reibungskupplung (2) nach Anspruch 8, **dadurch gekennzeichnet, dass** nach einer Kompensation des Fehlabstands die Lagefixierung mittels einer am Hebel (7) vorgesehenen Entsperrprofil (24) aufgehoben wird, indem dieses die gesteuerte Blattfeder (28) gegen die steuernde Blattfeder (27) entgegen der zweiten Rückstellkraft so weit verlagert, dass Öffnung (32) und Fixiernase (33) wieder voneinander getrennt werden.

10. Reibungskupplung (2) nach einem der Ansprüche 6 bis 9, **dadurch gekennzeichnet, dass** steuerende und gesteuerte Blattfeder (27, 28) einstückig mittels Stanz- und Biegeverfahren gebildet sind.

11. Reibungskupplung (2) nach einem der Ansprüche 7 bis 10, **dadurch gekennzeichnet, dass** der Anschlag (16a) mit der gesteuerten Blattfeder (27) vernietet ist.

## Claims

1. Friction clutch (2) for a motor vehicle, having a counterpressure plate (6), having a clutch disc (5), having a pressure plate (3), having a clutch cover (4) and having an actuating lever (10) and an actuating device with a lever (7), with the friction clutch being disengaged in the force-free state and being engaged by means of axial displacement of the actuating lever (10) which is actuated by the actuating device via the lever (7), and in an overtravel moved beyond the force-free state, an incorrect axial spacing between friction surfaces provided in the friction clutch (2) caused by wear being compensated, **characterized in that** a switchable stop (16) provided on the actuating device enables an overtravel of the lever (7) if a detected engagement path of the lever (7) exceeds a predefined dimension.

2. Friction clutch (2) according to Claim 1, **characterized in that** the switchable stop (16) prevents the overtravel again after a compensation of the incorrect spacing.

3. Friction clutch (2) according to Claim 1 or 2, **characterized in that**, during the course of an actuation, the lever (7) drives a controlling component (17) provided with a ramp (19) counter to a first restoring force which acts on a controlled component (18), provided with a counterpart ramp (20) and having a stop (16a) for the lever (7), in such a way that said component (18) is moved, perpendicular to the axial movement described by the lever (7), counter to a second restoring force.

4. Friction clutch (2) according to Claim 3, **characterized in that**, at the predefined engagement travel, the controlling component (17) and controlled component (18) fix in their present position, wherein in said present position the stop (16a) for the lever (7) is inactive and the lever (7) traverses the overtravel required for the compensation of the incorrect spacing.

5. Friction clutch (2) according to Claim 3 or 4, **characterized in that** the lever (7) has an unlocking profile (24) which, when the overtravel is traversed, moves the controlled component (18) beyond the present position counter to the second restoring force, such that the fixing of the two components (17, 18) is released again.

6. Friction clutch (2) according to one of Claims 3 to 5, **characterized in that** the controlling component (17) is formed by a controlling leaf spring (27) which is clamped at one end, the free end of which controlling leaf spring (27) has a profile (30) which, during an engagement process, is driven by the lever (7) counter to the first restoring force formed by the leaf spring constant.

7. Friction clutch (2) according to Claim 6, **characterized in that** the controlled component (18) is formed by a controlled leaf spring (28) which is clamped at one end, the free end of which controlled leaf spring (28) has a counterpart profile (31) which corresponds to the profile (30) of the controlling leaf spring (27), and which controlled leaf spring (28), during an engagement process, is moved by the controlling leaf spring (27) counter to the second restoring force which is formed by the leaf spring constant and which acts perpendicular to the first restoring force, with a stop (16a) which is attached to the controlled leaf spring (28) pivoting out of a contact surface with the lever (7) with increasing engagement travel.

8. Friction clutch (2) according to Claims 6 and 7, **characterized in that**, in a position of the profile (30) and counterpart profile (31) relative to one another which corresponds to a predefined engagement travel at which a compensation of the incorrect spacing should take place, an opening (32) is provided in the leaf spring (27, 28) in such a way that a fixing lug (33) of the other leaf spring (28, 27) engages into the opening (32) such that the two leaf springs (27, 28) are positionally fixed relative to one another in said position.

9. Friction clutch (2) according to Claim 8, **characterized in that**, after a compensation of the incorrect spacing, the positional fixing is eliminated by means of an unlocking profile (24) provided on the lever (7), by virtue of said unlocking profile (24) moving the controlled leaf spring (28) against the controlling leaf spring (27) counter to the second restoring force to such an extent that the opening (32) and fixing lug (33) are separated from one another again.

10. Friction clutch (2) according to one of Claims 6 to 9, **characterized in that** the controlling and controlled leaf springs (27, 28) are formed in one piece by means of punching and bending processes.

11. Friction clutch (2) according to one of Claims 7 to 10, **characterized in that** the stop (16a) is riveted to the controlled leaf spring (27).

## Revendications

1. Embrayage à friction (2) pour un véhicule automobile, comprenant une plaque de contre-pression (6), un disque d'embrayage (5), une plaque de pression (3), un couvercle d'embrayage (4) et un levier d'actionnement (10) et un dispositif d'actionnement comprenant un levier (7), l'embrayage à friction étant débrayé dans l'état sans force et étant embrayé par décalage axial du levier d'actionnement (10) actionné par le dispositif d'actionnement au moyen du levier (7) et dans le cas d'un dépassement de course au-delà de l'état sans force, compensant un défaut par écartement axial provoqué par l'usure entre les surfaces de friction prévues dans l'embrayage à friction (2), **caractérisé en ce qu'**une butée (16) commutable prévue sur le dispositif d'actionnement libère un dépassement de course du levier (7) lorsqu'une course d'embrayage détectée du levier (7) dépasse une mesure prédéfinie.

2. Embrayage à friction (2) selon la revendication 1, **caractérisé en ce que** la butée commutable (16) empêche à nouveau le dépassement de course après une compensation du défaut d'écartement.

3. Embrayage à friction (2) selon la revendication 1 ou 2, **caractérisé en ce que** le levier (7) entraîne au cours d'un actionnement un composant de commande (17) pourvu d'une rampe (19), à l'encontre d'une première force de rappel, lequel agit sur un composant (18) commandé, pourvu d'une rampe conjuguée (20) et présentant une butée (16a) pour le levier (7), de telle sorte que ce composant (18) soit déplacé perpendiculairement au déplacement axial décrit par le levier (7) à l'encontre d'une deuxième force de rappel.

4. Embrayage à friction (2) selon la revendication 3, **caractérisé en ce que** lors de la course d'embrayage prédéfinie, le composant de commande (17) et le composant commandé (18) sont fixés dans leur position actuelle, et dans cette position actuelle la butée (16a) pour le levier (7) n'est pas active, et le levier (7) décrit le dépassement de course nécessaire pour la compensation du défaut d'écartement.

5. Embrayage à friction (2) selon la revendication 3 ou 4, **caractérisé en ce que** le levier (7) présente un profilé de déverrouillage (24), qui, lors du dépassement de course, décale le composant commandé (18) à l'encontre de la deuxième force de rappel au-delà de la position actuelle, de sorte que la fixation des deux composants (17, 18) soit à nouveau libérée.

6. Embrayage à friction (2) selon l'une quelconque des revendications 3 à 5, **caractérisé en ce que** le composant de commande (17) est formé par un ressort à lame (27) de commande serré d'un côté, dont l'extrémité libre présente un profilé (30) qui est entraîné à l'encontre de la première force de rappel, formée par la constante du ressort à lame, par le levier (7) pendant une opération d'embrayage.

7. Embrayage à friction (2) selon la revendication 6, **caractérisé en ce que** le composant commandé (18) est formé par un ressort à lame (28) commandé serré d'un côté, dont l'extrémité libre présente un profilé conjugué (31), qui correspond au profilé (30) du ressort à lame de commande (27), et qui est décalé à l'encontre de la deuxième force de rappel agissant perpendiculairement à la première force de rappel, et formée par la constante du ressort à lame, par le ressort à lame de commande (27) pendant une opération d'embrayage, une butée (16a) montée sur le ressort à lame commandé (28) pivotant avec une course d'embrayage croissante hors d'une surface de contact avec le levier (7).

8. Embrayage à friction (2) selon les revendications 6 et 7, **caractérisé en ce que** dans une position du profilé (30) et du profilé conjugué (31) l'un par rapport à l'autre, qui correspond à une course d'embrayage prédéfinie, dans laquelle une compensation du défaut d'écartement doit avoir lieu, on prévoit une ouverture (32) dans le ressort à lame (27, 28) de telle sorte qu'un nez de fixation (33) de l'autre ressort à lame (28, 27) vienne en prise dans l'ouverture (32), de sorte que les deux ressorts à lame (27, 28) soient fixés en position l'un par rapport à l'autre dans cette position.

9. Embrayage à friction (2) selon la revendication 8, **caractérisé en ce qu'**après une compensation du défaut d'écartement, la fixation en position est supprimée au moyen d'un profilé de déverrouillage (24) prévu sur le levier (7), de telle sorte que celui-ci décale le ressort à lame commandé (28) contre le ressort à lame de commande (27) à l'encontre de la deuxième force de rappel, dans une mesure telle que l'ouverture (32) et le nez de fixation (33) soient à nouveau séparés l'un de l'autre.

10. Embrayage à friction (2) selon l'une quelconque des revendications 6 à 9, **caractérisé en ce que** les ressorts à lame de commande et commandé (27, 28) sont formés d'une seule pièce au moyen de procédés d'estampage et de cintrage.

11. Embrayage à friction (2) selon l'une quelconque des revendications 7 à 10, **caractérisé en ce que** la butée (16a) est rivetée au ressort à lame commandé (27).
